Europäisches Patentamt

(19) European Patent Office

Office européen des brevets

(11) Veröffentlichungsnummer: **0 057 364**
**B1**

(12) EUROPÄISCHE PATENTSCHRIFT

(45) Veröffentlichungstag der Patentschrift:
**18.12.85**

(51) Int. Cl.⁴: **C 10 G 1/06**, B 01 J 3/00

(21) Anmeldenummer: **82100307.6**

(22) Anmeldetag: **18.01.82**

(54) **Reaktor zum Hydrieren von Kohlebrei.**

(30) Priorität: **30.01.81 DE 3103081**

(43) Veröffentlichungstag der Anmeldung:
**11.08.82 Patentblatt 82/32**

(45) Bekanntmachung des Hinweises auf die Patenterteilung:
**18.12.85 Patentblatt 85/51**

(84) Benannte Vertragsstaaten:
**AT BE CH DE FR GB IT LI NL SE**

(56) Entgegenhaltungen:
**US - A - 4 111 663**

(73) Patentinhaber: **BASF Aktiengesellschaft,
Carl-Bosch-Strasse 38, D-6700 Ludwigshafen (DE)**

(72) Erfinder: **Schulz, Rudi, Johann-Merk-Strasse 5,
D-6701 Fussgoenheim (DE)**
Erfinder: **Puestel, Hubert, Kurpfalzstrasse 12,
D-6701 Dannstadt-Schauernheim (DE)**
Erfinder: **Weber, Georg, Eichenstrasse 67,
D-6700 Ludwigshafen (DE)**
Erfinder: **Kuerten, Heribert, Dr., Oelbergstrasse 29,
D-6730 Neustadt (DE)**

**Beschreibung**

Die vorliegende Erfindung betrifft einen mehrstufigen Reaktor zum Hydrieren von Kohlebrei in einem Druckgemäss für Drucke bis zu 700 bar, bevorzugt bis zu 350 bar mit bodenseitigen Zuleitungen für Gas und Kohlebrei durch den Reaktorboden, einer Ableitung im Reaktorkopf für Abschlamm, Gase und Dämpfe sowie Zwischenböden im Druckgefäss, durch die die einzelnen Reaktionsstufen voneinander getrennt werden.

Es ist bekannt, die Hydrierung von Kohle in vier hintereinander geschalteten Reaktoren durchzuführen. Diese Reaktoren sind alle gleich gross und weisen einen Innendurchmesser (ohne Ausmauerung) von 1 m und eine Höhe von 18 m auf. Oben und unten sind Konen mit 30° Gesamtöffnungswinkel angeordnet, wodurch der Reaktorquerschnitt auf den Querschnitt der Zu- bzw. Verbindungsleitungen reduziert wird. Im ersten Reaktor werden 40 bis 50% des Wasserstoffs, im 2. 30%, im 3. Reaktor 20% und im 4. weniger als 10% umgesetzt. Diese Verhältnisse korrespondieren mit der Verteilung der Wärmeproduktion in den 4 Reaktoren. Diese Abstufung zeigt, dass ein Rohrreaktor reaktionskinetisch am günstigsten ist. Dies bedeutet aber, dass möglichst viele Reaktoren mit Rührkesselverhalten hintereinander geschaltet eine Annäherung an das ideale Verhalten eines Rohrreaktors bringen. Eine Aufteilung der Reaktion auf mehr als 4 hintereinander geschaltete Reaktoren war aber nicht möglich, da am 4. Reaktor die Wärmeabstrahlung schon leicht grösser als die Wärmeproduktion war. Die innen durch Ausmauerung wärmegedämmten Hydrierreaktoren dürfen nämlich aussen nicht isoliert werden.

Aus wirtschaftlichen Überlegungen müssen die Reaktoren heute grösser im Durchmesser und damit auch im Volumen gebaut werden. Während für die bekannten Hochdruckreaktoren Durchmesser von 1 m die Grenze darstellten, können heute Reaktoren mit 4 bis 5 m Innendurchmesser gefertigt werden. Es erscheint wenig sinnvoll, solche Reaktoren mit dem schlanken Konus der bekannten Reaktoren zu bauen, da sie bei dem vorgegebenen Volumen praktisch nur noch aus 2 konischen Teilen bestehen würden. Ausserdem ist der Material- und Fertigungsaufwand zu gross. Grosse Hochdruckreaktoren weisen heute bevorzugt oben und unten einen Halbkugelabschluss auf. Für diese Reaktorform stellt sich das Problem, wie Gas und Flüssigkeit auf kurzer Strecke gleichmässig über den Querschnitt verteilt werden können.

Zwischenböden in Reaktoren für ein dreiphasiges System von Flüssigkeit mit dispergiertem Feststoff und Gas wurden von Blass und Cornelius (Chemie Ing. Techn. MS 417/76) schon beschrieben. Es wurden hier Siebböden, d.h. ebene Platten mit vielen kleinen runden Löchern benutzt. Der Lochdurchmesser wurde zwischen 2 und 4 mm variiert. Der freie Lochquerschnitt, bezogen auf den Apparatequerschnitt betrug 1,1 bis 36%. Die Bohrungsdurchmesser wurden scharfkantig mit einer Genauigkeit von ± 50 μm hergestellt. Die charakteristische Betriebsweise dieser Böden besteht in der Ausbildung eines grossen Gaspolsters unter dem Boden. Mit steigendem Gasdurchsatz wachsen die Gaspolster an. Nur durch Schwappbewegung der Sprudelschicht kann Flüssigkeit durch die Bohrungen in die nächst höhere Reaktorzelle gelangen und dadurch den axialen Flüssigkeitstransport bewirken. Diese Schwappbewegungen führen zu örtlichen und zeitlichen Druckschwankungen, die durch die ebenfalls gesteigerten instationären Wirbelströmungen in der Sprudelschicht verstärkt werden.

Diese Zwischenböden können bei der Kohlehydrierung jedoch nicht eingesetzt werden, da der gegen die Unterseite schwappende Kohlebrei in Tropfen hängenbleibt, austrocknet, verkokt und dann auch die kleinen Bohrungen zusetzt.

Es war daher die Aufgabe der vorliegenden Erfindung, einen Reaktor von 3 bis 5 m Innendurchmesser zu entwickeln, bei dem durch Hintereinanderschalten von mindestens 4, bevorzugt mehr als 4 Reaktionsstufen mit Rührkesselverhalten eine Annäherung an das gewünschte Rohrreaktorverhalten erreicht wird, und in möglichst kurzen Bauhöhen eine Gleichverteilung von Gas und Flüssigkeit über den Querschnitt beim Übergang von einer Stufe zur anderen gewährleistet wird, ohne dass eine Rückvermischung mit dem Inhalt der vorausgehenden Reaktorstufe auftritt.

Erfindungsgemäss werden diese Aufgaben durch die folgenden Merkmale gelöst:

a) Die in einem Druckgefäss eingebauten Zwischenböden weisen zur Vermeidung von Kohlebreianbackungen in Strömungsrichtung der Reaktanden gesehen auf ihrer ganzen Unterseite sich stetig verengende Querschnitte mit Durchtrittsöffnungen auf.

b) Die Zwischenböden können einen konkaven Querschnitt haben.

c) Die Oberseite der Zwischenböden ist in Strömungsrichtung gesehen durch stetige Querschnittserweiterungen der Durchtrittsöffnungen gekennzeichnet.

d) Die Querschnittsfläche der Durchtrittsöffnungen beträgt 1 bis 15%, bevorzugt 1 bis 5%, der Reaktorquerschnittsfläche.

e) Die Zwischenböden sind auf dem Reaktormantel eingeschweissten Ringen oder Nocken aufgelegt, wobei der Reaktormantel mit Ausnahme der eingeschweissten Pumpe durch eine Ausmauerung wärmegedämmt ist.

Bei den erfindungsgemässen Zwischenböden kann sich kein Gaspolster unter dem Boden ausbilden. Alle Flächenelemente des Bodens sind derart bespült, dass Kohlebrei nicht austrocknen kann und verkokt. Die Durchtrittsöffnungen sind wesentlich grösser gewählt, als in dem oben beschriebenen Siebboden von Blass und Cornelius. Der Querschnitt der Öffnungen wird einem Lochdurchmesser entsprechend 10 bis 90 mm ⌀ gewählt, bevorzugt 20 bis 50 mm ⌀. Die Gasgeschwindigkeit liegt dabei zwischen 3 und 8 m/s, so dass keine Flüssigkeit zurückströmen kann.

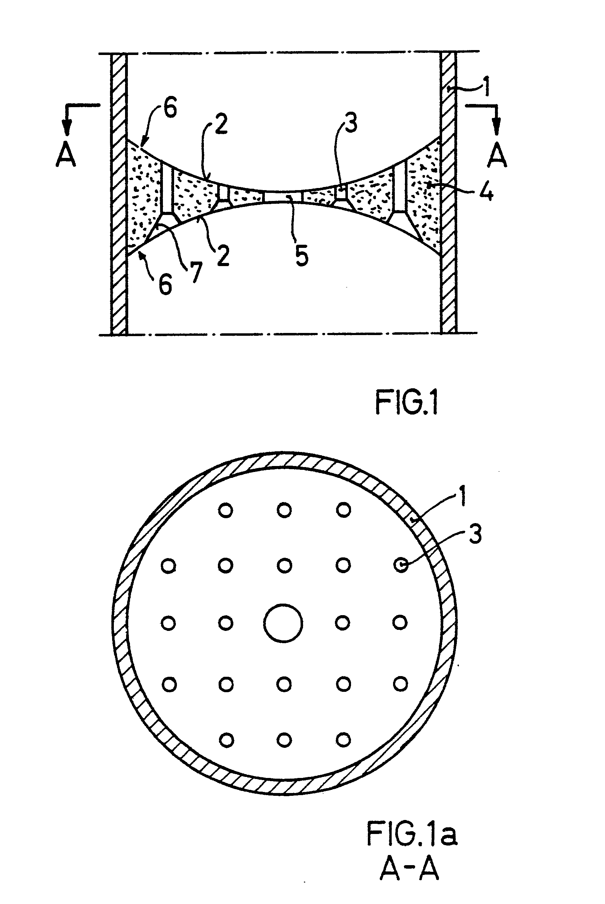

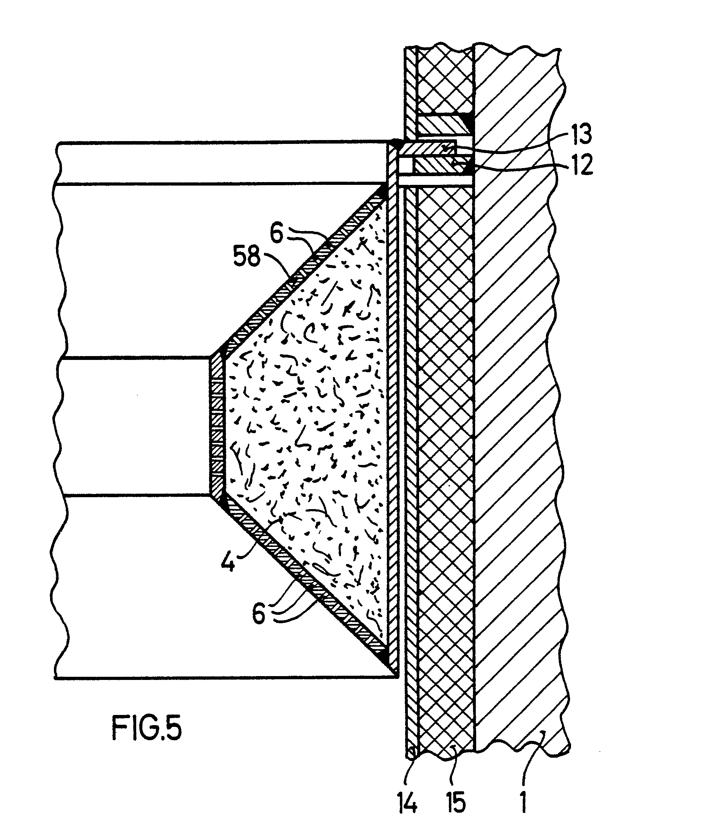

Die Fig. 1 bis 4, 1a bis 4a zeigen jeweils in Schnittansicht und Draufsicht, Fig. 5 in Seitenansicht einige charakteristische konstruktive Lösungsmöglichkeiten des Erfindungsgedankens. In Fig. 1 sind zwei gewölbte Schalen 2 gegeneinander gestellt, welche zusammen den Zwischenboden bilden. Ihre Form kann kegelig oder elliptisch sein oder eine Kugelform haben. Die Schalen 2 stehen durch rohrartige Durchtrittsöffnungen 3 miteinander in Verbindung, wobei auf der Unterseite der Schalen 2 der Einlauf in die Öffnungen 3 durch Konen 7 erfolgt. Durch diese Öffnungen 3 steigen Gas und Kohlebrei von einem Element des Reaktors 1 zum nächst höheren auf. Der Hohlraum zwischen den Schalen 2 wird mit einer keramischen Masse 4 ausgespritzt. Erfahrungsgemäss eignet sich dazu z. B. Asbestzement. Zusätzlich kann auch eine Bewehrung eingebracht werden. Zum Druckausgleich sind die Schalen 2 mit einer grossen Zahl kleiner Löcher 6 versehen. Für den Durchstieg kann der Boden mit einem Mannloch 5 ausgerüstet werden.

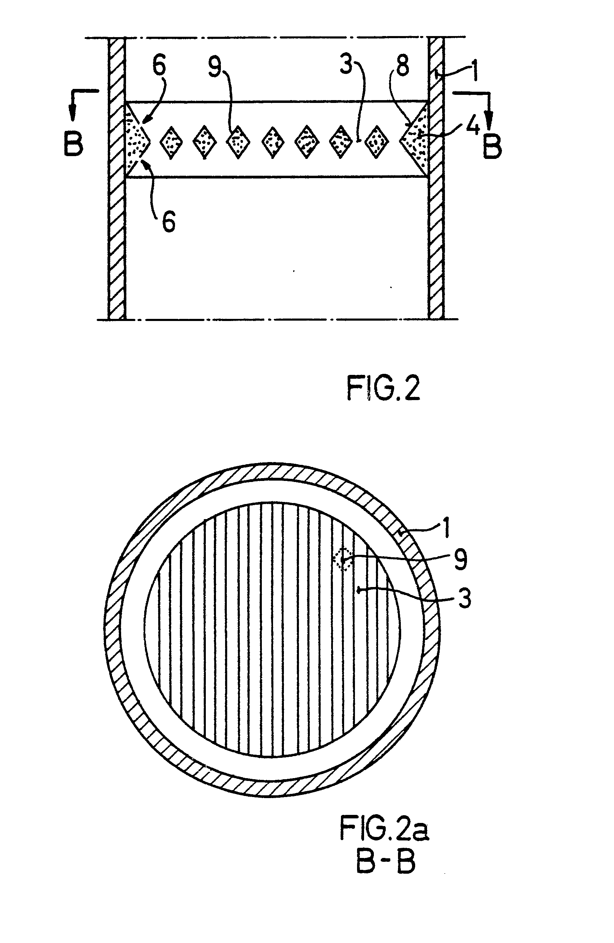

Fig. 2 zeigt eine konstruktive einfache Ausführungsform, die jedoch nur für grössere Öffnungsverhältnisse eingesetzt werden kann. Am Reaktormantel 1 ist ein umlaufender Ring 8 mit Dreiecksprofil angebracht. In diesen Ring werden rautenförmige Stäbe 9 eingelegt, die Schlitze als Durchschnittsöffnungen 3 offenlassen. Die Hohlräume der Profile können mit keramischen Massen 4 ausgefüllt werden, wobei zum Druckausgleich die Flächen mit vielen kleinen Bohrungen 6 versehen sind.

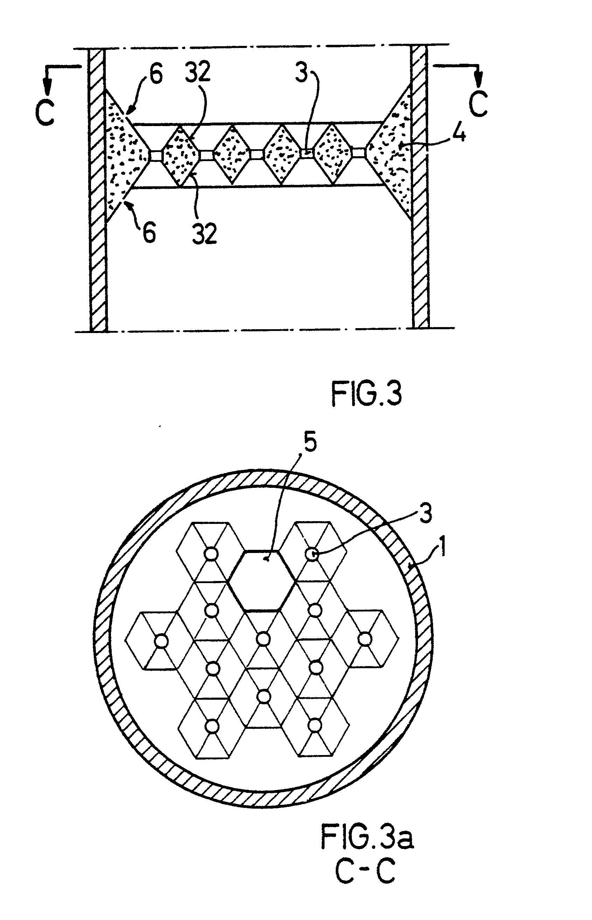

In Fig. 3 ist eine weitere Ausführungsform dargestellt, die sich in der Formgebung aus Sechseckelementen zusammensetzt. Jedes Flüssigkeitselement, das von unten am Zwischenboden ankommt, trifft auf eine schräge Fläche 32 und wird von dort zu einer Durchtrittsöffnung 3 geführt. An keiner Stelle ist eine Fläche so ausgedehnt, dass der Brei hängenbleiben und antrocknen kann. Eines dieser Sechseckelemente wird als Durchstieg 5 eingebaut. Die Hohlräume sind wieder mit einer keramischen Masse 4 ausgefüllt und die Schalelemente sind wiederum mit Löchern 6 zum Druckausgleich versehen.

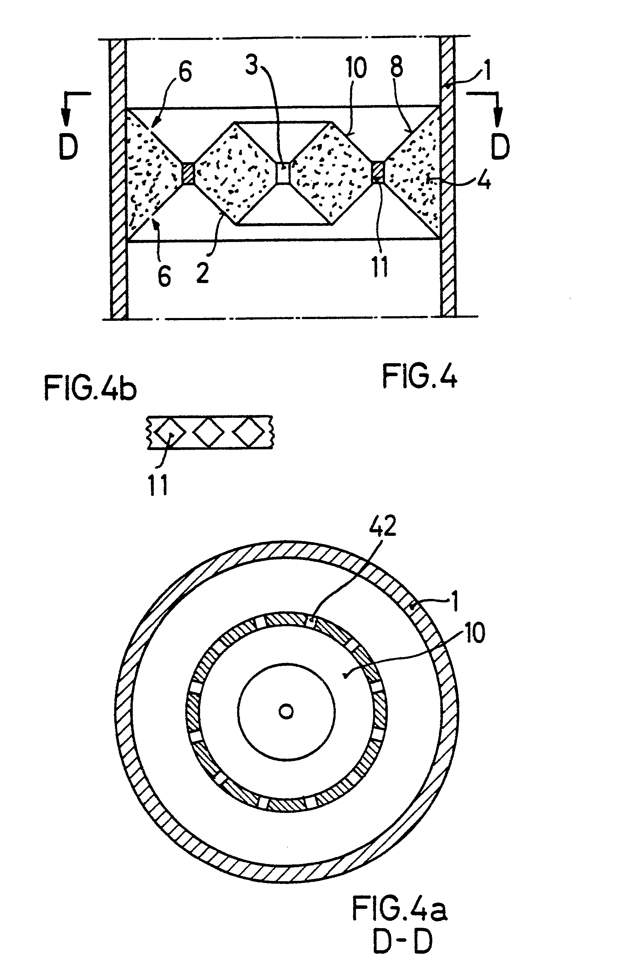

Eine weitere interessante Ausführungsform zeigt Fig. 4. Am Reaktormantel 1 ist wieder ein Ring 8 mit Dreiecksprofil angebracht. In der Mitte des Bodens befindet sich ein weiterer rautenförmiger Ring 10 mit einer zentralen Durchtrittsöffnung 3. Die beiden Ringe 8 und 10 sind durch rautenförmige Elemente 11 verbunden Fig. 4b, welche Öffnungen 42 bilden.

Aus Festigkeitsgründen sind die Hydrierreaktoren innen wärmegedämmt durch eine Ausmauerung 15, wie in Fig. 5 gezeigt ist. Vor dieser Ausmauerung ist ein Hemd 14 aus nichtrostendem Stahl eingebracht. Die Einbauten müssen so ausgebildet sein, dass sie Wärmedehnungen frei mitmachen können. Die Zwischenböden sind daher auf an der Reaktorwand 1 eingeschweissten Ringen oder Nocken 12 mit einem Ring 13 aufgelegt. Der umlaufende Aussenring 58 des Zwischenbodens entspricht dem Ring 8 gemäss Fig. 4. Dieser Ring 58 kann sich frei dehnen.

## Patentansprüche

1. Mehrstufiger Reaktor zum Hydrieren von Kohlebrei in einem Druckgefäss für Drucke bis zu 700 bar, vorzugsweise bis zu 350 bar mit Zuleitungen für Gas und Kohlebrei durch den Reaktorboden, einer Ableitung im Reaktorkopf für Abschlamm, Gase und Dämpfe sowie Zwischenböden im Druckgefäss, durch die die einzelnen Reaktionsstufen voneinander getrennt werden, dadurch gekennzeichnet, dass die Zwischenböden (2) zur Vermeidung von Kohlebrei-Anbackungen in Strömungsrichtung der Reaktanden (Gas und Kohlebrei) auf ihrer ganzen Unterseite sich stetig verengende Querschnitte mit Durchtrittsöffnungen (3) aufweisen.

2. Reaktor nach Anspruch 1, dadurch gekennzeichnet, dass die Zwischenböden (2) einen konkaven Querschnitt aufweisen.

3. Reaktor nach Anspruch 1 und 2, dadurch gekennzeichnet, dass die Durchtrittsöffnungen (3) sich zur Oberseite der Zwischenböden (2) hin stetig erweitern.

4. Reaktor nach Anspruch 1 bis 3, dadurch gekennzeichnet, dass die Durchtrittsöffnungen (3) 1 bis 15%, bevorzugt 1 bis 5% der Reaktorquerschnittsfläche einnehmen.

5. Reaktor nach Anspruch 1 bis 4, dadurch gekennzeichnet, dass die Zwischenböden (2) auf am Reaktormantel eingeschweissten Ringen (13), bzw. Nocken aufliegen.

## Claims

1. A multi-stage reactor for hydrogenating coal slurry in a pressure vessel for pressures of up to 700 bar, preferably of up to 350 bar, with inlets for gas and coal slurry through the reactor bottom, an outlet for sludge, gases and vapors in the reactor top, and dividing trays in the pressure vessel, by means of which trays the individual reaction stages are separated from one another, wherein each dividing tray (2) has a progressively decreasing cross-section, with passage orifices (3), over its entire lower face, so as to prevent coal slurry caking onto the tray in the direction of flow of the reactants (gas and coal slurry).

2. A reactor as claimed in claim 1, wherein the dividing trays (2) are of concave cross-section.

3. A reactor as claimed in claims 1 and 2, wherein the passage orifices (3) widen progressively toward the upper face of the dividing tray (2).

4. A reactor as claimed in claims 1 to 3, wherein the cross-sectional area of the passage orifices (3) is from 1 to 15%, preferably from 1 to 5%, of the cross-sectional area of the reactor.

5. A reactor as claimed in claims 1 to 4, wherein the dividing trays (2) rest on rings (13) or studs welded onto the reactor jacket.

## Revendications

1. Rèacteur à plusieurs étages pour l'hydrogénation d'une bouillie de charbon dans un récipient à pression pour des pressions allant jusqu'à 700 bars, de préférence jusqu'à 350 bars, comportant des conduites d'amenée de gaz et de bouillie de charbon traversant le fond du réacteur, une conduite d'évacuation de la boue, des gaz et des vapeurs placée dans la tête du réacteur, et des plateaux intermédiaires placés dans le récipient à pression qui séparent les uns des autres les différents étages de réaction, caractérisé par le fait que les plateaux intermédiaires (2), pour que la bouillie de charbon n'y attache pas, présentent sur tout le dessous, dans le sens de circulation des réactants (gaz et bouillie de charbon), des sections à ouvertures de passage (3) qui se rétrécissent de façon continue.

2. Réacteur selon la revendication 1, caractérisé par le fait que les plateaux intermédiaires (2) ont une section concave.

3. Réacteur selon les revendications 1 et 2, caractérisé par le fait que les ouvertures de passage (3) s'élargissent de façon continue vers le dessus des plateaux intermédiaires (2).

4. Réacteur selon les revendications 1 à 3, caractérisé par le fait que les ouvertures de passage (3) occupent de 1 à 15%, de préférence de 1 à 5%, de l'aire de la section du réacteur.

5. Réacteur selon les revendications 1 à 4, caractérisé par le fait que les plateaux intermédiaires (2) sont posés sur des anneaux (13) ou des taquets soudés à l'intérieur à la paroi latérale du réacteur.

FIG.1

FIG.1a
A-A

FIG.2

FIG.2a
B-B

FIG.3

FIG.3a
C-C

FIG.4b

FIG.4

FIG.4a
D-D

FIG.5